# EUROPEAN PATENT SPECIFICATION

(11) **EP 0 558 742 B1**
(45) Date of publication and mention of the grant of the patent: **18.08.1999**
(21) Application number: 92920960.9
(22) Date of filing: 23.09.1992
(51) Int. Cl.: G01N 27/447

(54) **ELECTROPHORESIS WITH CHEMICALLY SUPPRESSED DETECTION**
ELEKTROPHORESE MIT CHEMISCH UNTERDRÜCKTER DETEKTION
ELECTROPHORESE A DETECTION SUPPRIMEE CHIMIQUEMENT

(30) Priority: 24.09.1991 US 764645; 04.10.1991 US 771336; 04.10.1991 US 771597
(43) Date of publication of application: 08.09.1993
(73) Proprietor: THE DOW CHEMICAL COMPANY, Midland, Michigan 48674 (US)
(72) Inventor: DASGUPTA, Purnendu, K., Lubbock, TX 79424 (US); LI-YUAN, Bao 2414 5th Street, Lubbock, TX 79401 (US); ROCKLIN, Roy, D., Sunnyvale, CA 94087 (US); POHL, Christopher, A., Union City, CA 94587 (US); STILLIAN, John, Pleasanton, CA 94566 (US); AVDALOVIC, Neboisa, San Jose, CA 95129 (US)
(74) Representative: Peuscet, Jacques
(86) International application number: US9208071
(87) International publication number: WO9306475

(56) References cited:
- EP-A- 0 069 285
- EP-A- 0 075 371
- EP-A- 0 180 321
- EP-A- 0 295 942
- US-A- 4 908 116
- ANALYTICAL CHEMISTRY vol. 62, no. 5, 1 March 1990, WASHINGTON, DC, US pages 443 - 446 X. HUANG 'USE OF AN ON-COLUMN FRIT IN CAPILLARY ZONE ELECTROPHORESIS : SAMPLE COLLECTION'

## Description

### TECHNICAL FIELD

The present invention relates to method and apparatus using capillary electrophoresis and ion suppression for the determination of anions or cations.

### BACKGROUND ART

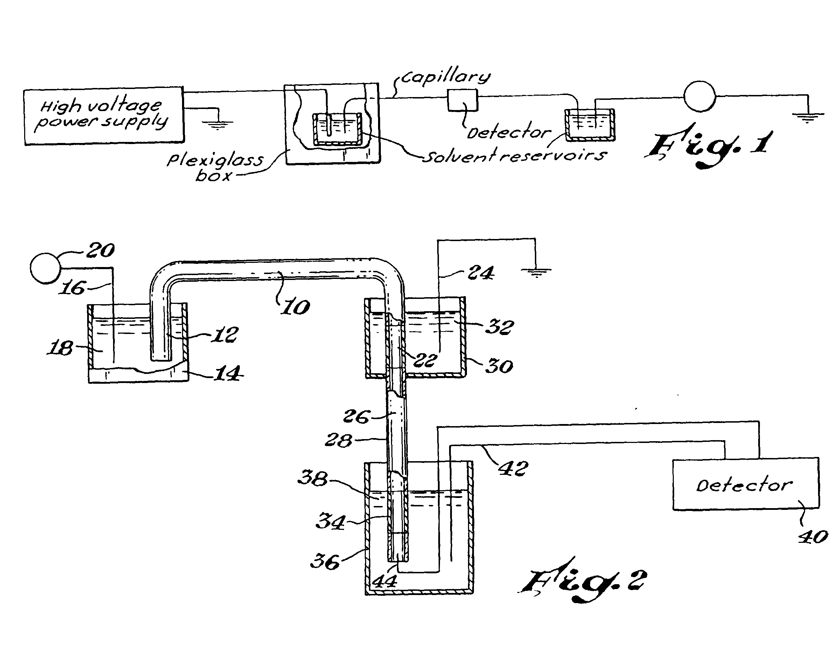

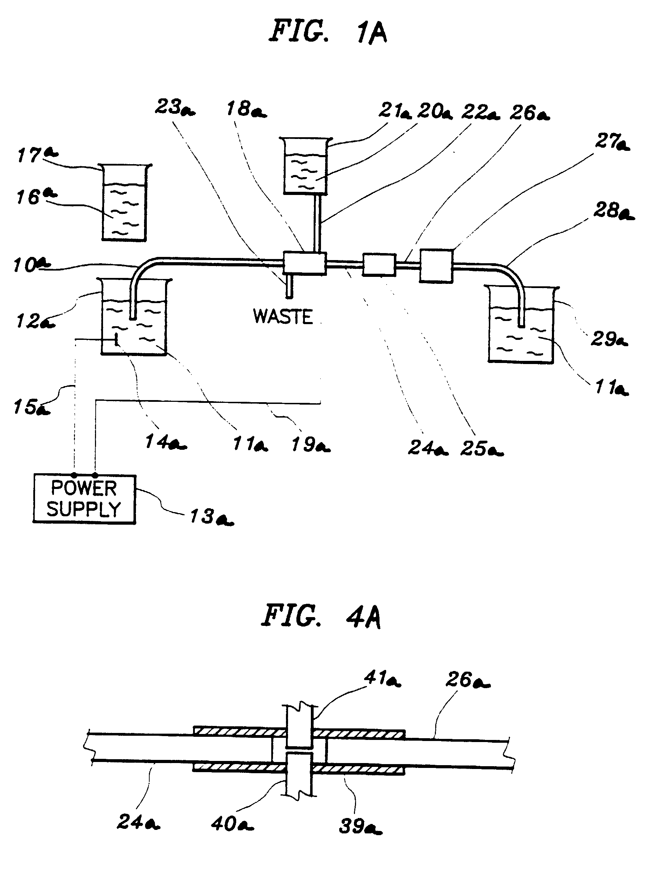

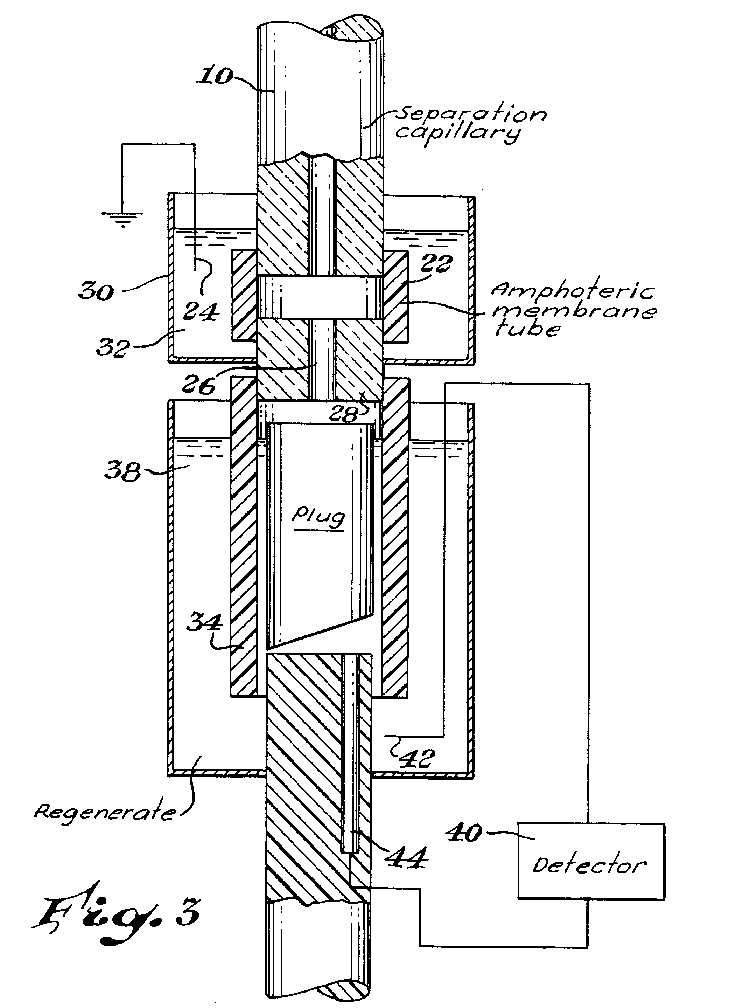

Capillary electrophoresis is a known technique involving electrophoresis in small bore capillaries. This approach provides methods for efficient analytical separations of ionic species including macromolecules. A typical capillary electrophoresis system is shown in Fig. 1. As can be seen, a capillary is positioned between two solvent reservoirs containing electrolyte. Electrodes present in each of the reservoirs and coupled to a power supply capable of delivering upwards to 30 kV 5 per 100 cm of capillary provide a voltage gradient to drive charged species through the capillary bore. A detector is positioned at a point between the two high voltage electrodes to permit detection of various ionic species migrating in the capillary. A detector so positioned is sometimes referred to as an on-column detector.

A number of approaches have been developed to detect the solutes separated by capillary electrophoresis depending, in part, upon the nature of the solute detected. UV absorption and fluorescence have been the most commonly used detection modes. Mass spectrometric, radiometric and electrochemical methods of detection have also been utilized. With regard to electrochemical detection, amperometry and conductivity methods have been used.

Off-column amperometric detection utilizing a porous glass capillary to cover a crack in the capillary has also been reported. Wallingford, R.A., et al., Anal. Chem. (1987) 59, 1762-1766; Ewing, A.G., et al., Anal. Chem. (1989) 61, 292A-303A. End-column amperometry and conductivity detection have also been performed. Huang, et al., Anal. chem. (1991), 63, 189-192. A significant problem with on-column and end-column detection utilizing electrochemical techniques is the effect of the high voltage applied to the electrodes to generate the voltage gradient across the capillary. Small variations in this high voltage gradient (typically ranging from 20-30 kV) have significant impact upon the voltages used for amperometric detection and conductivity detection which generally utilizes less than 1 volt in such detection systems.

Even for off-column electrochemical detection, a significant signal to noise problem exists due to the presence of relatively high concentrations of the electrolyte needed in the eluent to generate the voltage gradient across the length of the capillary bore. This is especially problematic for detection utilizing conductivity since such measurements are more significantly affected by electrolyte concentration than amperometric detection which is based primarily upon the detection of redox reactions at the detection electrodes.

Although electrolyte suppression has been used primarily in ion exchange chromatography in conjunction with conductivity detection (see e.g. U.S. Patent Nos. 3,897,213 3, 3,920,397, 3,925,019, 3,956,559, 4,474,664, 4,751,004, 4,459,357 and 4,999,098), such suppressors have not been adapted for use with capillary electrophoresis.

The references discussed above are provided solely for their disclosure prior to the filing date of the present application and nothing herein is to be construed as an admission that the inventor is not entitled to antedate such disclosure by virtue of prior invention.

The following is a discussion of the background art from a different viewpoint. Electrophoresis is a well developed chemical analysis technique. A review reference on this subject is Chapter 9 of Chromatography - Fundamentals and Applications of Chromatographic and Electrophoretic Methods, Part A: Fundamentals and Techniques, edited by E. Heftmann, Elsevier Scientific Publishing Company, 1983. Capillary electrophoresis (CE) is an important advance in electrophoresis which was pioneered by Jorgenson and Lukacs as reported in Analytical Chemistry 1298 (1981) and in Science, vol. 222, no. 4621, 1983, pp. 266-272. Since a small diameter capillary is used in CE, a relatively high applied voltage can be used without generating problematic thermal gradients in the capillary. The efficiency of separation in CE is a function of, among other things, the applied voltage. The efficiency of CE is relatively high, e.g., in excess of 400,000 theoretical plates.

The following is a description of a typical CE experiment. A 50-100 micrometer internal diameter silica capillary tube is filled with a suitable conducting buffer. The outlet end of the capillary is immersed in a reservoir containing the buffer and an electrode. A sample containing fluorescent ions of interest is introduced into the inlet end of the capillary and then the inlet end of the capillary is placed into another reservoir containing the buffer and another electrode. A voltage of 30,000 volts is impressed between the electrodes. A fluorescence detector is positioned near the outlet end of the capillary to detect the ions of interest.

The movement of the sample ions of interest is controlled by two factors: (1) electrophoretic migration; and (2) electroosmotic flow. Electrophoretic migration is the migration of the ions of interest towards the oppositely charged electrode under the influence of the electric field. Electroosmotic flow is bulk flow of the buffer in the capillary when the inside surface of the capillary which is in contact with the buffer comprises fixed charge sites which in turn have corresponding mobile counter-ions in the buffer. An unmodified silica capillary surface comprises silanol (Si-OH) groups that are negatively charged (Si-O⁻) when the pH of the buffer is greater than about 2, and positively charged (Si-OH₂⁺) when the pH of the buffer is less than about 2.

When the surface is negatively charged, then the corresponding mobile counter-ions of the negatively charged surface, e.g., sodium ions (Na⁺), migrate under the influence of the electric field and in the process drag the bulk solvent with them. Thus, the direction of the electroosmotic flow is from the positive to the negative electrode when the surface is negatively charged.

When the surface is positively charged, then the corresponding mobile counter-ions of the positively charged surface, e.g., biphosphate ions (HPO₄⁻²); migrate under the influence of the electric field and in the process drag the bulk solvent with them. Thus the direction of the electroosmotic flow is from the negative to the positive electrode when the surface is positively charged. A positively charged surface can also be obtained, e.g., by adsorbing hydrophobic cations onto the inside surface of the capillary.

When the surface is not charged, then there is no electroosmotic flow. Thus, depending on the charge (positive or negative) of the ions of interest, the nature and extent of capillary surface charging and the polarity of the applied voltage, electroosmosis can augment, counteract or even override the electrophoretic migration. Since sample components to be determined must travel from the inlet end of the capillary to the detector which is located near the outlet end of the capillary, it is essential that they move in the desired direction.

Waters Chromatography Division of Millipore of Milford, Massachusetts and Dionex Corporation of Sunnyvale, California are the leading domestic manufacturers of CE instruments for the analysis of common ions. The Waters instrument utilizes indirect photometric detection, see for example Jandik et al., LC GC magazine, September 1991 issue, beginning on page 634. The Dionex system uses a photometric detector or a fluorescence detector, see for example the Dionex advertisement in LC GC magazine, September 1991 issue, on page 639. At the present time, the preferred detection method in CE for the determination of common ions is indirect photometric detection.

Even though CE has many advantages, it also has several characteristics that need improvement. For example, the concentration detection limit of CE could be improved.

### DISCLOSURE OF INVENTION

According to a first aspect the invention provides a capillary electrophoresis apparatus for separating ionic species comprising a capillary adapted to contain an electrolyte, the capillary having a sample inlet portion and an outlet portion, a first electrode in electrical communication with the inlet portion of the capillary, a second electrode in electrical communication with the outlet portion of the capillary, a power supply in electrical communication with said first and second electrodes, and detector means, characterized by suppressor means including means for exchanging ions, the means for exchanging ions being in liquid communication with the outlet portion of the capillary and with detector means, the means for exchanging ions being stationary, the detector means being isolated from the current between said first and said second electrode.

According to a further aspect the invention provides a method of ion analysis characterized by the combination of the following steps:
(a) passing a sample containing ionic species of interest in an electrolyte solution including electrolyte ions of opposite charge to said ionic species of interest through capillary electrophoretic separating means comprising a capillary, a first and a second electrodes for applying an electric field along the capillary, in which said ionic species of interest are separated,
(b) exchanging counter-ions of opposite charge to said ionic species of interest in the electrolyte for regenerant counter-ions using a stationary means for exchanging counter-ions thereby reducing the response of an electrolyte to a detector, which is isolated from the current between said first and said second electrode, to produce a suppressed electrolyte.

In accordance with the invention, apparatus and methods are provided for increasing the sensitivity of detection of ionic species separated by capillary electrophoresis. The apparatus includes capillary electrophoretic separating means, suppressor means and detector means. The capillary electrophoretic separator means typically include a small bore capillary having a first end in communication with a first electrolyte reservoir which also contains a first electrode means. The capillary also has a second end having an ion conduction means in communication with the second electrolyte reservoir containing a second electrode means. The first end of the capillary is capable of receiving electrolyte from the first reservoir which is present throughout the entire bore of the capillary. The ion conducting means at the second end of the capillary is capable of conducting current generated between the first and second electrodes when an electrolyte is present in said capillary and said first and said second reservoirs and a voltage is applied to the electrodes. This construction essentially isolates the suppressor means and detector means from the current and high voltage gradient generated between the two electrodes.

The suppressor means comprises at least one capillary effluent compartment having an inlet and an outlet end. The inlet end is in communication with the second end of the capillary in the capillary electrophoretic separating means. The suppressor means also contains at least one regenerant compartment means and at least one ion exchange membrane partitioning the capillary effluent compartment means and the regenerant compartment means. This ion exchange membrane is permeable to ions of the same charge (i.e., positive or negative) as the counter ion of the ionic species to be separated and impermeable to ions of the same charge as the ionic species to be separated.

The detector means of the apparatus is in communication with the outlet end of the suppressor means and is suitable for detecting resolved ionic species eluting therefrom.

In operation, the ionic species of the sample are separated in the bore of the capillary of the electrophoretic separating means by a voltage gradient generated by applying a voltage across the electrodes. The effluent from this separating means flows into the suppressor means and in particular the capillary effluent compartment means. The regenerant compartment means contains a regenerant which is dissociated into cations and anions. Since the ion exchange membrane partitioning the capillary effluent compartment and regenerant compartment is preferably permeable to ions of the same charge (i.e., positive or negative) as the counter ions of the ionic species to be detected, such counter ions are capable of crossing the membrane into the regenerant compartment. The regenerant ion of the same charge is capable of crossing the membrane from the regenerant compartment into the effluent in the capillary effluent compartment. The net effect is to exchange the counter ion of the ionic species of interest.

For example, if an anion is to be detected and the electrolyte is sodium hydroxide, a typical regenerant is sulfuric acid. For each mplecule of electrolyte one sodium ion is replaced with a hydronium ion from the regenerant sulfuric acid to form water. Similarly, the sodium ion associated with the anionic species of interest is replaced with a hydronium ion from the regenerant solution. As a consequence, the overall conductivity of the eluent decreases and the overall conductivity of ionic species and counter ion increases. The thus treated effluent then flows to a detector. Since the overall concentration of electrolyte has been reduced, the sensitivity of detecting conductivity increases.

The following is a disclosure of the invention from a different viewpoint. The instant invention is the provision of suppressed detection for CE. A primary benefit of the instant invention is improved limits of detection. One apparatus embodiment of the invention is an improved capillary electrophoresis apparatus of the type that generally includes a capillary, the capillary having a sample inlet portion and an outlet portion, a first electrode in electrical communication with the inlet portion of the capillary, a second electrode in electrical communication with the outlet portion of the capillary and a power supply in electrical communication with the first and second electrodes. The improvement comprises means for exchanging ions, the means for exchanging ions being in liquid communication with the capillary, the means for exchanging ions being stationary.

Another apparatus embodiment of the invention is an improved capillary electrophoresis apparatus of the type that generally includes a capillary, the capillary having a sample inlet portion and an outlet portion, a porous conduit means, the channel of the porous conduit means being in liquid communication with the capillary, a first electrode in electrical communication with the inlet portion of the capillary tube, a second electrode in electrical communication with the porous conduit means, a power supply in electrical communication with the first and second electrodes. The improvement comprises means for exchanging ions, the means for exchanging ions being in liquid communication with the channel of the porous conduit means, the means for exchanging ions being stationary.

One method embodiment of the invention is an electrophoresis anion analysis method comprising the steps of: (a) separating anions of interest by electrophoresis in a buffer solution; (b) exchanging cations of the buffer for regenerant cations using a stationary means for exchanging cations thereby reducing the electrical conductivity of the buffer to produce a suppressed buffer; and (c) measuring the electrical conductivity of the suppressed buffer to determine the separated anions.

Another method embodiment of the invention is an electrophoresis cation analysis method comprising the steps of: (a) separating cations of interest by electrophoresis in a buffer solution; (b) exchanging anions of the buffer for regenerant anions using a stationary means for exchanging anions thereby reducing the electrical conductivity of the buffer to produce a suppressed buffer; and (c) measuring the electrical conductivity of the suppressed buffer to determine the separated cations.

### BRIEF DESCRIPTION OF THE DRAWINGS

Fig. 1 is a schematic diagram of a prior art apparatus for performing capillary electrophoresis derived from Fig. 1 of Ewing, et al., Anal. Chem. (1989), 61, 292A-303A.

Fig. 2 is a schematic diagram of one of the embodiments of the invention.

Fig. 3 is a schematic diagram of the ion conducting means and suppressor means used in Example 1.

Fig. 4 is an electropherogram demonstrating the separation and detection of various anionic species by measuring conductivity using an embodiment of the invention.
Fig. 1A is a schematic drawing of one apparatus embodiment of the invention;

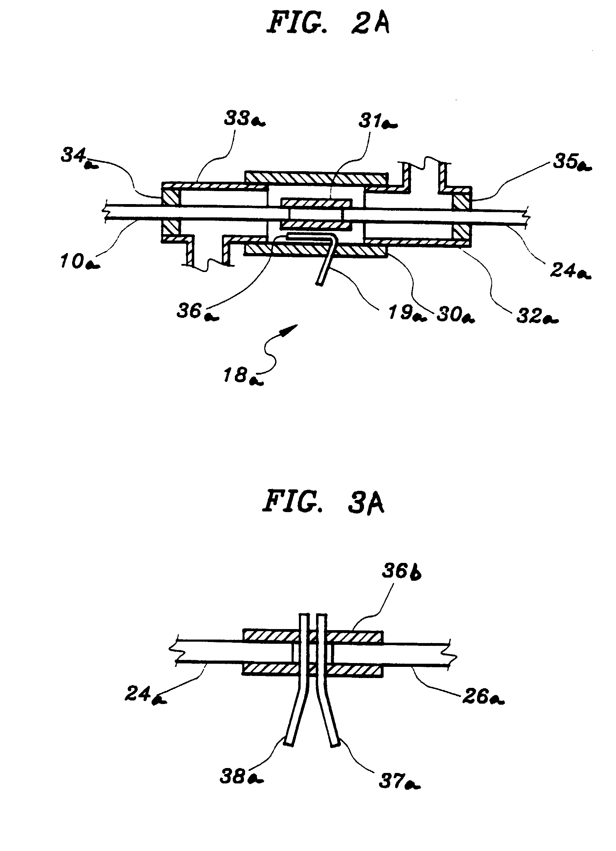

Fig. 2A is a cross-sectional side view of one suppressor embodiment of the invention;
Fig. 3A is a cross-sectional side view of one electrical conductivity cell embodiment of the invention;

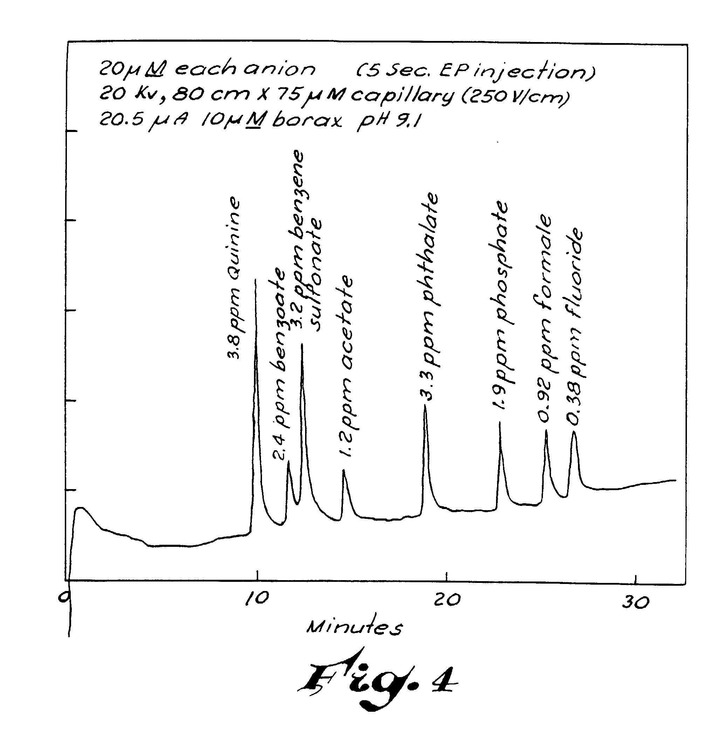

Fig. 4A is a cross-sectional side view of another electrical conductivity cell embodiment of the invention;

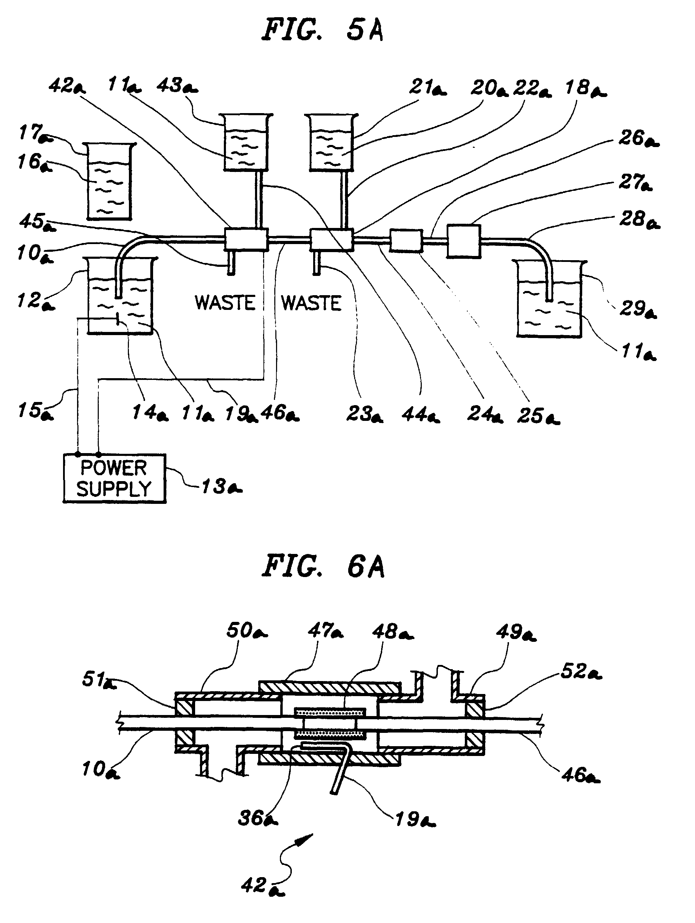

Fig. 5A is a schematic drawing of another apparatus embodiment of the invention;
Fig. 6A is a cross-sectional side view of one buffer bridge embodiment of the invention.

### MODES FOR CARRYING OUT THE INVENTION

The system of the present invention is useful for determining a large number of solutes so long as such solutes are anions or cations. A suitable sample includes surface waters and other liquids such as industrial chemical wastes, body fluids, beverages such as fruits and wines and drinking water. When the term "ionic species" is used herein, it includes species in ionic form and components of molecules which are ionizable under the conditions of the present system.

Generally, the ionic species which are particularly susceptible to detection by the apparatus and methods disclosed herein are those species that absorb visible or ultraviolet light only weakly and therefore are poorly detected by photometric absorbance detection. Examples of weakly absorbing species are common inorganic ions such as chloride, sulfate, sodium and potassium as well as many organic species such as acetate, succinate and trimethylamine.

As used herein, a "capillary electrophoretic separating means" refers to any means for separating ionic species which contains an elongate narrow bore through which an electrolyte can be passed and which has ends that can be placed in contact with first and second electrolyte reservoirs. Although in the preferred embodiments, typical narrow bore capillaries generally used in prior art devices are used, the term "capillary" is not limited to such capillaries. Rather, as used herein capillary refers to any elongate bore in a solid support having the dimensions on the order of magnitude of the internal dimensions of prior art capillary devices. Such capillaries have acceptable bore diameters ranging from 1 to 1000 µm, more preferably 25 to 100 µm. Generally, the length of such capillaries are about 1 cm to 10 meters, more preferably 20 cm to 100 cm. Based on these parameters, capillaries for use in practicing the present invention may comprise such capillaries or may comprise channels of irregular or regular shape formed in a solid support such as silica by etching or machining. In some instances it may be desired to form one side of a capillary in two separate blocks of solid support material which can thereafter be joined to form the complete capillary. In general, the cross-sectional area of such non-standard capillaries is substantially similar to that of conventional capillaries.

Referring to Fig. 2, a simplified apparatus for performing the present invention is illustrated. The system includes capillary 10 which contains a first end 12 immersed in an electrolyte reservoir 14. Also contained within this reservoir is first electrode 16 and an electrolyte 18. This first electrode 16 is connected to high voltage supply unit 20. The second end of the capillary 10 has an ion conduction means 22 attached thereto. This ion conduction means can be any conducting device that allows conduction of the current resulting from the high voltage current generated between electrodes 16 and 24 through capillary 10. Such conducting means, because of the use of suppressor means and detector downstream from the ion conduction means, requires that this ion conduction means be chosen such that a substantial amount of the mass flow through capillary 10 pass by ion conduction means 22 toward suppressor tube 34. One embodiment of conductive means comprises a gap between the capillaries with an insulating sleeve having one or more conducting holes. Alternatively, the insulating sleeve may be loosly fitting to form an eluent gap between the capillaries and the sleeve. A further embodiment of the ion conduction means includes a capillary gap with a porous sleeve capable of conducting ions through the pores contained therein. Such gaps, pores or holes are used to provide a channel for ionic current between the eluent at the second end of capillary 10 and the second electrode 24 and should be chosen such that at least about 50% of the mass flow passes such conducting means to remain in the downstream mass flow channel 26. In general, the nature of such gaps, holes or pores should be large enough to provide sufficient ionic current to complete the high voltage circuit but not be so large as to allow the eluent to be diverted into reservoir 30.

In the preferred embodiments, the ion conductivity means 22 is an amphoteric membrane, preferably a sleeve which is capable of engaging the second end of capillary 10 and an end of downstream conduit 28. A specific method for producing such an amphoteric membrane sleeve is disclosed in Example 1. Other methods will be readily apparent to those skilled in the art and basically involve derivitizing a membrane with both anionic and cationic functional groups.

The second reservoir 30 also contains an electrolyte 32 which is in contact with the second electrode 24 and the ionic conduction means 22 to complete the high voltage circuit. As a consequence, the voltage drop along the remaining flow path to the detector is negligible.

In general, the electrolyte present in at least the first reservoir and the capillary bore is dependent upon the ionic species to be detected. When the ionic species is an anion, the electrolyte is preferably the salt form of a weak acid. Examples include sodium borate, sodium carbonate and sodium hydorxide. When the ionic species to be detected is a cation, the electrolyte is preferably the salt form of a weak base. An example of such an electrolyte is hydrogen chloride.

An important aspect of practicing the invention, however, involves the proper choice of voltage to be applied across the electrophoresis electrodes 16 and 24. Since a high voltage circuit is produced between electrode 16 and electrode 24 via the ionic conducting means 22 and electrolyte solution 32, there is no voltage potential downstream from ionic conducting means 22 to drive the ionic species and the electrolyte into the suppressor means. To overcome this problem, the voltage is chosen such that it induces an electroendosmotic flow in the direction from the first reservoir to the detector. Electroendosmotic flow is generated primarily because of a local voltage which exists at the interface between the inside surface of the capillary and the electrolyte solution. This potential, sometimes referred to as the zeta potential, is dependent upon the material forming the inside surface of the capillary and the solution in contact with this surface.

In a silica capillary the charge on the inside wall of the capillary is negative and the direction of electroendosmotic flow is toward the negative electrode or away from the positive electrode. It is possible to reverse the direction of electroendosmotic flow by coating or derivatizing the wall of the silica capillary such that the charge on the wall is positive instead of negative. Under such circumstances to ensure electroendosmotic flow to the detector, the polarity of the electrode in the first reservoir should be reversed. It is also possible to use capillaries made of materials such as polyethylene or polystyrene that have no surface charge. These materials can then be functionalized to generate a positive or negative charge for example by quanternization or sulfonation respectively using known chemistries. The major reason for controlling electroendosmotic flow is to control separation resolution of the ionic species being separated. If the electroendosmotic flow is the same direction as the electrophoretic direction of the ionic species the separation resolution is less than when the electroendosmotic flow is in the opposite direction of the electrophoretic direction.

The downstream connector 28 is connected to a suppressor tube 34 contained in a regenerant compartment 36. The regenerant compartment 36 contains a regenerant 38 appropriate for the ionic species to be detected and the electrolyte used for capillary electrophoresis.

The suppressor tube 34 has an internal bore which forms a compartment to contain the effluent from the capillary 10. The inlet portion of this capillary effluent compartment is connected to downstream conduit means 28. An ion exchange membrane is positioned between this capillary effluent and the regenerant compartment. In general, suppressor tube 34 comprises an ion exchange membrane to facilitate ionic transport between the capillary effluent compartment and the regenerant compartment. The ion exchange membrane is chosen such that it is preferentially permeable to the counter ion of the ionic species. Thus, if the ionic species is an anion its counter ion is a cation. The ion exchange membrane is chosen to be permeable to cations. The converse is also true. Such tubular membranes can be purchased commercially such as the cation exchange membrane tube Nafion® available from Perma Pure Products, Toms River, N.J. It is to be understood, however, that the suppressor means need not be a tubular form of an ion exchange membrane. Alternate embodiments include flat membranes such as that disclosed in U. S. Patent No. 4,999,098.

Although it is preferable that the cross-sectional area of the downstream conduit 28 be the same as that of the cross-sectional area of the bore of capillary 10 and further that the cross-sectional area of the capillary effluent compartment 34 have substantially the same cross-sectional area, it is not necessary that such cross-sectional areas be the same. Useful results have been obtained where the inside diameter of the circular bore capillary 10 was 75 microns and the inside diameter of the Nafion® cation exchange membrane tube was 400 microns. However, these results can be further improved when a 350 µm diameter plug is inserted inside the Nafion® tube to reduce the effective cross-sectional flow area of the ion suppressor (see Example 1).

The suppressor length should be suffiecient to exchange cations or anions in the effluent but not be so long as to result in substantial band broadening. Such suppressor length can be from 100 µm to 10 cm, preferably 1 mm to 1 cm.

The foregoing describes a passive diffusion suppressor means for reducing electrolyte concentration. However, any suppressor system can be used in practicing the invention including those utilizing the application of electrical fields across the ion exchange membrane to increase the rate of ion exchange above that which would otherwise be obtained by diffusion limited exchange kinetics. See e.g. U.S. Patent No. 4,999,098.

After passing the ion exchange membrane, the thus treated effluent is substantially depleted in the electrolyte and counter ions to the ionic species of interest. Such treated effluent may be directed to a flow through conductivity cell for detection of the ionic species present. Alternatively, one or both of the detection electrodes 42 and 44 can be inserted into the treated effluent stream exiting the suppressor means. When used in this manner, the outlet of the suppressor means may be maintained in the regenerant solution 38 provided the electrodes are positioned sufficiently within this end region so that conductivity is not adversely influenced by diffusion of regenerant ions into the effluent stream. In general, when one or more of the electrodes are inserted into the suppressor means outlet, the linear flow rate of the effluent should be sufficient to offset the potential diffusion of the regenerant ions into the effluent stream which would otherwise defeat the purpose of the suppressor means.

Although the foregoing has described the invention primarily within the context of open-tube capillary zone electrophoresis, it is believed that other modes of capillary electrophoresis may be practiced using the invention. Such other modes include isotachophoresis, micellar electrokinetic capillary chromatography, capillary gel electrophoresis and isoelectric focusing.

The following sets forth a specific embodiment of the invention and is not to be construed as a limitation of the claims as appended hereto.

### Example 1

Referring to Fig. 3, the separation capillary 10 was a fused silica capillary with dimensions of 75 µm i.d., 375 µm o.d., and 75 cm length. It was butted up against a second fused silica capillary 28 of the same i.d. and o.d. but about 6 mm long.

The amphoteric ion exchange membrane tube 22 with dimensions of about 400 µm i.d., 800 µm o.d., and about 1 cm long also acted as a sleeve to hold the two pieces of capillary 10 and 28 together. The amphoteric membrane sleeve was attached to the capillaries by tightly tying nylon monofilament (75 µm diameter) around the sleeve. The amphoteric membrane sleeve was made from a substrate tube made of polyethylene/polyvinyl acetate. This tube (Microline®) was obtained from Thermal Plastic Scientific, Warren, N.J. It was radiation grafted with vinylbenzylchloride (VBC) to about 50% VBC by weight. The grafted tube was refluxed for 14 hours in a 1 M solution of dimethylamino-acetonitrile in methanol and allowed to cool for 6 hours. Following rinses in methanol and water, the tube was heated to about 60°C in 1 M sodium hydroxide solution for 90 minutes. This reaction hydrolyzes the -CN to -CO₂⁻. The resulting tube contains the following functional group covalently bonded to the VBC molecules in the membrane: -N⁺(CH₃)₂CH₂CO₂⁻.

The other end of capillary 28 was inserted into a length of Nafion® cation exchange tubing with approximate dimensions of 400 µm i.d., 800 µm o.d., and 1 cm long (Perma Pure Products, Toms River, N.J.) which served as the suppressor 34. The suppressor was held onto capillary 28 by tying with Nylon monofilament. Much of the internal volume of the suppressor was taken up with a 350 µm o.d. by 5 mm long plug made from capillary with the ends sealed with epoxy resin. The approximate length of the suppressor from the exit of tube 28 to the detector electrode 44 was 6 mm.

One of the detector electrodes 44 was made by inserting a 127 µm platinum wire into a 150 µm i.d., 350 µm o.d. by 2 cm long capillary and filling the remaining volume with epoxy resin. The face of the capillary was polished to expose the end of the platinum wire. This electrode was inserted about 1 mm inside the suppressor, and the other end of the wire was connected to the conductivity detector cables. The second detector electrode 42 was placed into the regenerant solution 38.

The electrolyte in both the first electrolyte reservoir and in the second electrolyte reservoir was a 10 mM borax solution, pH 9.1. The regenerant 38 was a 15 mM sulfuric acid solution.

The applied high-voltage was 20 kV, which resulted in a current of 20.5 µA. A 5 second electrophoretic injection was used to inject a sample of 20 µM each of the following anions: quinate, benzoate, benzenesulfonate, acetate, phthalate, phosphate, formate, and fluoride. The results are shown in Fig. 4.

The following modes for carrying out the invention are from a different viewpoint. Referring now to Fig. 1A, therein is shown a schematic drawing of an apparatus embodiment of the invention including a fused silica capillary 10a. The inlet portion of the capillary 10a is shown immersed in a buffer lla contained in a first buffer reservoir 12a. The buffer 11a is usually water based but can be based on other solvents such as alcohols, acetonitrile, tetrahydrofuran and glycols. A power supply 13a supplies a selected voltage (or current) to a first electrode 14a via a wire 15a. A sample to be analyzed 16 is contained in a sample reservoir 17a. The sample to be analyzed 16a contains ions of interest. The outlet portion of the capillary 10a is connected to a suppressor 18a. The high voltage power supply 13a is connected to the suppressor 18a via a wire 19a. A regenerant 20a is contained in a regenerant reservoir 21a. A tube 22a connects the reservoir 21a with the suppressor 18a. The regenerant 21a flows through the suppressor 18a, through a tube 23a to waste. As will be discussed below in detail, the suppressor 18a contains an ion exchange material or means and the regenerant is used to regenerate this ion exchange material or means. A tube 24a connects the suppressor 18a to an electrical conductivity detector 25a. A tube 26a connects the conductivity detector 25a to an optional additional detector 27a such as an optical or an electrochemical detector. A tube 28a is shown immersed in buffer lla contained in a second buffer reservoir 29a and connected to the detector 27a. The tube 28a is preferably of a relatively large internal diameter for the reasons to be discussed below. An aliquot of the sample 16a can be introduced into the inlet portion of the capillary laO by lifting the inlet portion of the capillary 10a from the reservoir 12a temporarily placing it in the sample reservoir 17a and then placing it back into the reservoir 12a. This can be done manually but preferably it is done by automated means as is well known in the art. The volume of sample 16a so introduced into the inlet portion of the capillary 10a, of course, depends on the length of time the inlet portion of the capillary 10a is immersed into the sample 16a because the level of the sample 16a is higher than the level of the buffer lla in the second buffer reservoir 29a. Alternatively, the sample 16a can be introduced into the inlet portion of the capillary 10a by electrophoretic migration and/or electroosmotic flow, and it should also be possible to use a sample injection valve. The fused silica capillary 10a is preferred in the invention because of its excellent thermal conductivity characteristics as is well known in the art. However, such a capillary is not critical in the invention and the capillary 10a can be made almost any material.
Furthermore, although the capillary 10a is preferably circular in cross section, this is not critical either. A single capillary 10a is preferred in the invention but this is also not critical. Thus, the capillary of the invention, in its broadest scope, is a conduit as defined below. The inlet portion of the capillary of the invention is that portion where the sample to be analyzed is introduced. The outlet portion of the capillary of the invention is that portion where electrophoretic zones leave the capillary and enter, e.g., the suppressor. Normally, the inlet portion of the capillary and the outlet portion of the capillary are the opposite ends of the capillary. However, this is not critical in the invention. Thus, for example, it is contemplated in the invention that a sample can be introduced into the middle of a capillary with its cations of interest migrating toward one end of the capillary while its anions of interest migrate toward the other end of the capillary.

Referring now to Fig. 2A, therein is shown a detailed cross-sectional view of the suppressor 18a. A tubular jacket 30a, made for example of silicone rubber or plasticized polyvinyl chloride, surrounds a length of tubing 31a made of NAFION™ sulfonated fluoropolymer ion exchange material. The outlet portion of the capillary 10a is shown inserted into one end of the of the tubing 31a. The tubing 24a is shown inserted into the other end of the tubing 31a. A miniature tee 32a is shown inserted into one end of the jacket 30a. Another miniature tee 33a is shown inserted into the other end of the jacket 30a. The capillary 10a is sealed in the tee 33a by sealant 34a such as room temperature vulcanizing silicone rubber. The capillary tube 24a is sealed in the tee 32a by sealant 35a such as room temperature vulcanizing silicone rubber. A platinum wire 19a is shown inserted through the jacket 30a and the end of the wire 19a within the jacket 30a is the second electrode 36a. The electrode 36a can, alternatively, be embedded into the tubing 31a but preferably it is positioned exterior of the tubing 31a. In some cases, the electrode 36a is better positioned near the end of the tube 31a where it is connected to the capillary 10a. Obviously, the electrode can be positioned in the reservoir 21a.

The internal diameter of the tubing 31a preferably is about the same as the internal diameter of the capillary 10a. Such small bore ion exchange material is not commercially available. The smallest internal diameter NAFION™ tubing has an internal diameter of about 400 micrometers. However, the internal diameter of such material can be made smaller by a number of techniques such as: (a) by swelling the NAFION™ tubing in alcohol and then stretching it; (b) heating the NAFION™ tubing and then stretching it; (c) a combination of (a) and (b); (d) making a small internal diameter tube of NAFION™ by dipping a small diameter wire, e.g. a 75 micrometer tungsten wire, in a colloidial dispersion of NAFION™, thermally curing the NAFION™ deposited on the wire and then withdrawing the wire from the so formed NAFION™ tube (United States Patent 4,731,263 to Grot, herein fully incorporated by reference, discloses making colloidial dispersions of NAFION™ as does Martin in Analytical Chemistry 1639 (1982), herein fully incorporated by reference); and preferably by (e) drilling or piercing a small hole through a solid piece of swelled ion exchange material followed by drying to shrink it onto the capillary 10a and the tubing 24a.

A conduit is herein defined as any structure having at least one channel therethrough. The tubing 31a is one example of a conduit comprising ion exchange material. However, the invention is not limited to a conduit in the shape of a tube. For example, the conduit can be in the shape of a perforated mass of ion exchange material, e.g., a perforated bead of conventional ion exchange resin such as DOWEX™ 50W or DOWEX™ 2 ion exchange resin (DOWEX™ is a trademark of The Dow Chemical Company). A sheet of ion exchange material can be used in a conduit of the invention, e.g., by clamping it between plates having suitable channels and openings. The conduit of the invention preferably comprises an ion exchange material that extends from the channel to the exterior of the conduit. However, the invention will also work when the conduit comprises merely a material that conducts ions or can be made to conduct ions such as cellulose acetate membrane or even porous glass. A porous conduit can be imbibed with a liquid ion exchanger as discussed below.

Referring now to Fig. 3A, therein is shown a detailed cross-sectional view of one embodiment of a cell of the electrical conductivity detector 25a. The cell includes a short piece of flexible tubing 36b having a suitably small internal diameter, e.g., 125 micrometers. A fine platinum wire 37a is shown piercing the tubing 36b. Another fine platinum wire 38a is also shown piercing the tubing 36a. The wires 37a and 38a can be so positioned by first piercing the tubing 36b with a fine hypodermic needle, e.g., a 30 gauge hypodermic needle, inserting the platinum wire into the hypodermic needle and then withdrawing the hypodermic needle while holding the platinum wire in place. The wires 37a and 38a are positioned as close together as possible without touching, e.g., a spacing of 100-300 micrometers. The wires 37a and 38a are the conductivity detector electrodes and are, of course, connected to the electronics portion of a suitable electrical conductivity detector such as an Ion Chromatography electrical conductivity detector.

Referring now to Fig. 4A, therein is shown a detailed cross-sectional view of another embodiment of a cell of the electrical conductivity detector 25a. The cell includes a short piece of flexible tubing 39a having a suitably small internal diameter, e.g., 125 micrometers. A stainless steel wire 40a is shown piercing the tubing 39a. Another stainless steel wire 41a is shown piercing the tubing 39a on the opposite side of the tubing 39a. The ends of the wires 40a and 41a are positioned close together in the tube 39a without touching, e.g., a spacing of 100 micrometers. The wires 40a and 41a are the conductivity detector electrodes and are, of course, connected to the electronics portion of a suitable electrical conductivity detector such as an Ion Chromatography electrical conductivity detector.

Preferably, the resistance to flow of the elements in line after the outlet of the capillary 10a are exceedingly low so as to maintain the flat-fronted flow profile in the capillary 10a. Since this ideal is not perfectly attained, it is advantageous to slightly elevate the buffer level in the reservoir 12a relative to the buffer level in the reservoir 29a.

Referring now to Fig. 5A, therein is shown a schematic drawing of another apparatus embodiment of the invention which is similar to the embodiment shown in Fig. 1A. The elements shown in Fig. 5A that are the same as the elements shown in Fig. 1A have the same reference numerals.
However, it will noticed that in Fig. 5A the wire 19a is no longer directed to the suppressor 18a. Instead, the wire 19a is directed to a buffer bridge 42a. The buffer 11a is also contained by a third buffer reservoir 43a. A tube 44a connects the reservoir 43a with the buffer bridge 42a. The buffer lla in the reservoir 43a flows through the buffer bridge 42a, through a tube 45a and then to waste. As will be discussed below in detail, the buffer bridge 42a contains a porous material or other means such as simply a fractured capillary tube (ala Linharcs and Kissinger, Analytical Chemistry 2076 (1991), herein fully incorporated by reference) which provides electrical communication between the buffer within the buffer bridge and the buffer within or exiting the outlet portion of the capillary 10a. The buffer bridge is connected to the suppressor 18a by tubing 46a.

Referring now to Fig. 6A, therein is shown a detailed cross-sectional view of the buffer bridge 42a. The buffer bridge 42a is similar in most respects to the suppressor 18a as will be appreciated by comparing Fig. 6A with Fig. 2A. A tubular jacket 47a, made for example of silicone rubber or plasticized polyvinyl chloride, surrounds a length of tube made of a porous material such as porous glass. The outlet portion of the capillary 10a is shown inserted into one end of the of the tube 48a. The tubing 46a is shown inserted into the other end of the tube 48a. A miniature tee 49a is shown inserted into one end of the jacket 47a. Another miniature tee 50a is shown inserted into the other end of the jacket 47a. The capillary 10a is sealed in the tee 50a by sealant 51a such as room temperature vulcanizing silicone rubber. The capillary tube 46a is sealed in the tee 49a by sealant 52a such as room temperature vulcanizing silicone rubber. A platinum wire 19a is shown inserted through the jacket 47a and the end of the wire 19a within the jacket 47a is the second electrode 36a. The electrode 36a can, alternatively, be embedded into the tubing 48a but preferably it is positioned exterior of the tubing 48a. Obviously, the electrode 36a can be positioned in the reservoir 43a. It will be appreciated that the buffer bridge 42a is similar to the salt bridge of Wallingford and Ewing except that the salt solution (potassium chloride) is being replaced with, e.g., buffer of a suitable concentration or a solution of large ions that can not cross the porous barrier. The tubes 46a, 24a and 26a of Fig. 5A as well as the tubes 24a and 26a of Fig. 1A are preferably as short as possible because the flow profile in these tubes is generally parabolic as opposed to the flat-fronted flow profile in the capillary 10a.

Means for exchanging ions is defined herein as any means which accepts a cation and in return gives up a cation, any means which accepts an anion and in return gives up an anion and any means which absorbs salts (such as the free base form of DOWEX™ 4 ion exchange resin which absorbs, e.g., copper nitrate from solution, or such as a crown ether which absorbs salt from solution) including a solid ion exchange material and a liquid ion exchange material. A stationary means for exchanging ions includes the suppressor 18a but also would include a device like the buffer bridge 42a wherein a liquid ion exchanger is positioned within the jacket 47a even though the liquid ion exchanger can be flowed through the device in place of the buffer, i.e., even though the liquid ion exchanger is moving the device is not. Similarly, the porous tube 48a can be imbibed with a liquid ion exchanger and regenerant can be flowed through the device in place of the buffer. A tube containing ion exchange resin is a stationary means for exchanging ions. On the other hand, introducing a suspension of ion exchange particles into the effluent buffer from the capillary tube of a CE system before the buffer flows through a conductivity detector (ala Gjerde and Senson, European Patent Application No. 89110394.7, publication No. 0 345 782 A2, herein fully incorporated by reference) is a mobile means for exchanging ions, i.e., the ion exchange particles move in and with the buffer. Thus, another way of distinguishing the means for exchanging ions of the invention is that the means for exchanging ions of the invention is "non-invasive". A non-invasive means for exchanging ions is a means that is not introduced into the buffer stream, i.e., a means that is not completely surrounded by the buffer stream, and which preferably partitions the buffer stream from a separate source of regeneration cations or anions.

A method embodiment of the invention, with respect to anion analysis, can be understood by reference to Fig. 5A. The capillary tube 10a is temporarily immersed in the sample 16a to introduce the sample 16a into the capillary tube 10a. The sample contains anions of interest. The buffer lla contains a salt of a weak acid such as a borate buffer. The ion exchange material of the suppressor 18a is a cation exchanger such a NAFION™ brand ion exchange material from DuPont. The regenerant 20a is a source of hydrogen ions such as dilute sulfuric acid or a suspension of ion exchange particles in the hydrogen ion form. The power supply 13a is turned on so that the electric field extends from the buffer bridge 42a and along the bore of the capillary 10a. If the capillary 10a is negatively charged as discussed above, then the electrode 14a is made positive and the electrode 36a is made negative so that the electroosmotic flow is toward the cation exchange material of the suppressor 18a. In addition, if the capillary 10a is negatively charged, then the anions of interest tend to migrate out of the inlet portion of the capillary 10a and into the reservoir 12a. This tendency is overcome for many anions of interest by the more rapid electroosmotic flow toward the suppressor 18a. If the capillary 10a is positively charged as discussed above, then the electrode 14a is made negative and the electrode 36a is made positive so that the electroosmotic flow is toward the cation exchange material of the suppressor 18a. In addition, if the capillary 10a is positively charged, then the anions of interest tend to migrate in the same direction as the electroosmotic flow, i.e., toward the suppressor 18a. Thus, there is a distinct benefit in using a positively charged capillary tube 10a in this embodiment. However, this is not critical and there are benefits from using a negatively charged capillary tube 10a in this embodiment. In the suppressor 18a, referring now also to Fig. 2A, the cations of the buffer are exchanged for hydrogen ions at the inside surface of the ion exchange tube 31a so that the buffer lla is converted into a weak acid solution to form a suppressed buffer solution. This suppressed buffer solution then flows through the electrical conductivity detector 25a. The conductivity of the suppressed buffer, as determined by the detector 25a, is relatively low compared to the conductivity of the buffer lla. When the ions of interest flow through the detector 25a, they are sensitively detected upon the background of the suppressed buffer. In this respect, the invention is similar to suppressed detection in Ion Chromatography. Hopefully, of course, the ions of interest are resolved into detected separate zones by the prior electrophoresis in the capillary tube 10a. The ion exchange material of the suppressor 18a is regenerated by the flow of dilute sulfuric acid regenerant 20a flowing around the exterior of the tube 31a. In the above discussion, the buffer comprised a salt of a weak acid. However the invention is not limited to a buffer comprising a salt of a weak acid, e.g, a strong base can be used such as sodium hydroxide which is converted to water by the suppressor. The buffer, when a conductivity detector is used and when its cations are exchanged for the regenerant cations, must be converted to a solution that has reduced electrical conductivity. In this respect, a reference to the suppressed detection Ion Chromatography art will indicate other buffers and regenerant cations that can be used in the invention. The buffer, when another detector is used than a conductivity detector and when its cations are exchanged for the regenerant cations, must be converted to a solution that has a reduced detector response. Most preferably, the anion of the buffer has about the same electrophoretic mobility as the anions of interest.

Another method embodiment of the invention, with respect to anion analysis, can be understood by reference to Fig. 1A and Fig. 2A. The capillary tube 10a is temporarily immersed in the sample 16a to introduce the sample 16a into the capillary tube 10a. The sample contains anions of interest. The buffer lla contains a salt of a weak acid such as a borate buffer. The ion exchange material of the suppressor 18a is a cation exchanger such a NAFION™ ion exchange material from DuPont. The regenerant 20a is a source of hydrogen ions such as dilute sulfuric acid or a suspension of ion exchange particles in the hydrogen ion form. The power supply 13a is turned on so that the electric field extends across the ion exchange tube 31a and along the bore of the capillary 10a. If the capillary 10a is negatively charged as discussed above, then the electrode 14a is made positive and the electrode 36a is made negative so that the electroosmotic flow is toward the cation exchange material of the suppressor 18a. In addition, if the capillary 10a is negatively charged, then the anions of interest tend to migrate out of the inlet portion of the capillary 10a and into the reservoir 12a. This tendency is overcome for many anions of interest by the more rapid electroosmotic flow toward the suppressor 18a. If the capillary 10a is positively charged as discussed above, then the electrode 14a is made negative and the electrode 36a is made positive so that the electroosmotic flow is toward the cation exchange material of the suppressor 18a. In addition, if the capillary 10a is positively charged, then the anions of interest tend to migrate in the same direction as the electroosmotic flow, i.e., toward the suppressor 18a. Thus, there is a distinct benefit in using a positively charged capillary tube 10a in this embodiment. However, this is not critical and there are benefits from using a negatively charged capillary tube 10a in this embodiment. In the suppressor 18a the cations of the buffer are exchanged for hydrogen ions at the inside surface of the ion exchange tube 31a so that the buffer 11a is converted into a weak acid solution to form a suppressed buffer solution. If the electrode 36a is negatively charged, then the effectiveness of the suppressor is enhanced. The suppressed buffer solution then flows through the electrical conductivity detector 25a. The conductivity of the suppressed buffer, as determined by the detector 25a, is relatively low compared to the conductivity of the buffer lla. When the ions if interest flow through the detector 25a, they are sensitively detected upon the background of the suppressed buffer. In this respect, the invention is similar to suppressed detection in Ion Chromatography. Hopefully, of course, the ions of interest are resolved into detected separate zones by the prior electrophoresis in the capillary tube 10a. The ion exchange material of the suppressor 18a is regenerated by the flow of dilute sulfuric acid regenerant 20a flowing around the exterior of the tube 31a. The method embodiment for anion analysis discussed above in reference to Fig. 1A is preferred over the method embodiment for anion analysis discussed above in reference to Fig. 5A as being simpler and probably more effective. In the above discussion, the buffer comprised a salt of a weak acid. However the invention is not limited to a buffer comprising a salt of a weak acid, e.g, a strong base can be used such as sodium hydroxide which is converted to water by the suppressor. The buffer, when a conductivity detector is used and when its cations are exchanged for the regenerant cations, must be converted to a solution that has reduced electrical conductivity. In this respect, a reference to the suppressed detection Ion Chromatography art will indicate other buffers and regenerant cations that can be used in the invention. The buffer, when another detector is used than a conductivity detector and when its cations are exchanged for the regenerant cations, must be converted to a solution that has a reduced detector response. Most preferably, the anion of the buffer has about the same electrophoretic mobility as the anions of interest.

A method embodiment of the invention, with respect to cation analysis, can be understood by reference to Fig. 5A. The capillary tube 10a is temporarily immersed in the sample 16a to introduce the sample 16 into the capillary tube 10a. The sample contains cations of interest. The buffer lla contains a salt of a weak base such as a solution aniline hydrochloride or a salt of a zwitterionic compound such as glycinium hydrochloride. The ion exchange material of the suppressor 18a is an anion exchanger such as DOWEX™ 2 brand ion exchange material from Dow. The regenerant 20a is a source of hydroxide ions such as dilute sodium hydroxide or a suspension of ion exchange particles in the hydroxide ion form. The power supply 13a is turned on so that the electric field extends from the buffer bridge 42a and along the bore of the capillary 10a. If the capillary 10a is positively charged as discussed above, then the electrode 14a is negative and the electrode 36a is positive so that the electroosmotic flow is toward the anion exchange material of the suppressor 18a. In addition, if the capillary 10a is positively charged, then the cations of interest tend to migrate out of the inlet portion of the capillary 10a and into the reservoir 12a. This tendency is overcome for many cations of interest by the more rapid electroosmotic flow toward the suppressor 18a. If the capillary 10a is negatively charged as discussed above, then the electrode 14a is positive and the electrode 36a is negative so that the electroosmotic flow is toward the anion exchange material of the suppressor 18a. In addition, if the capillary 10a is negatively charged, then the anions of interest tend to migrate in the same direction as the electroosmotic flow, i.e., toward the suppressor 18a. Thus, there is a distinct benefit in using a negatively charged capillary tube 10a in this embodiment. However, this is not critical and there are benefits from using a positively charged capillary tube 10a in this embodiment. In the suppressor 18a, referring now also to Fig. 2A, the anions of the buffer are exchanged for hydroxide ions at the inside surface of the ion exchange tube 31a so that the buffer lla is converted into a weak base solution to form a suppressed buffer solution. This suppressed buffer solution then flows through the electrical conductivity detector 25a. The conductivity of the suppressed buffer, as determined by the detector 25a, is relatively low compared to the conductivity of the buffer 11a. When the cations if interest flow through the detector 25a, they are sensitively detected upon the background of the suppressed buffer. In this respect, the invention is similar to suppressed detection in Ion Chromatography. Hopefully, of course, the cations of interest are resolved into detected separate zones by the prior electrophoresis in the capillary tube 10a. The ion exchange material of the suppressor 18a is regenerated by the flow of dilute sodium hydroxide regenerant 20a flowing around the exterior of the tube 31a. In the above discussion, the buffer comprised a salt of a weak base. However the invention is not limited to a buffer comprising a salt of a weak base, e.g, a strong acid can be used such as sulfuric acid which is converted to water by the suppressor. The buffer, when a conductivity detector is used and when its anions are exchanged for the regenerant anions, must be converted to a solution that has reduced electrical conductivity. In this respect, a reference to the suppressed detection Ion Chromatography art will indicate other buffers and regenerant cations that can be used in the invention. The buffer, when another detector is used than a conductivity detector and when its anions are exchanged for the regenerant anions, must be converted to a solution that has a reduced detector response. Most preferably, the cation of the buffer has about the same electrophoretic mobility as the cations of interest.

Another method embodiment of the invention, with respect to cation analysis, can be understood by reference to Fig. 1A and Fig. 2A. The capillary tube 10a is temporarily immersed in the sample 16a to introduce the sample 16a into the capillary tube 10a. The sample contains cations of interest. The buffer lla contains a salt of a weak base such as a solution aniline hydrochloride or a salt of a zwitterionic compound such as glycinium hydrochloride. The ion exchange material of the suppressor 18a is an anion exchanger such as DOWEX™ 2 brand ion exchange material from Dow. The regenerant 20a is a source of hydroxide ions such as dilute sodium hydroxide or a suspension of ion exchange particles in the hydroxide ion form. The power supply 13a is turned on so that the electric field extends across the ion exchange tube 31a and along the bore of the capillary 10a. If the capillary 10a is positively charged as discussed above, then the electrode 14a is negative and the electrode 36a is positive so that the electroosmotic flow is toward the anion exchange material of the suppressor 18a. In addition, if the capillary 10a is positively charged, then the cations of interest tend to migrate out of the inlet portion of the capillary 10a and into the reservoir 12a. This tendency is overcome for many anions of interest by the more rapid electroosmotic flow toward the suppressor 18a. If the capillary 10a is negatively charged as discussed above, then the electrode 14a is positive and the electrode 36a is negative so that the electroosmotic flow is toward the anion exchange material of the suppressor 18a. In addition, if the capillary 10a is negatively charged, then the anions of interest tend to migrate in the same direction as the electroosmotic flow, i.e., toward the suppressor 18a. Thus, there is a distinct benefit in using a negatively charged capillary tube 10a in this embodiment. However, this is not critical and there are benefits from using a positively charged capillary tube 10a in this embodiment. In the suppressor 18a the anions of the buffer are exchanged for hydroxide ions at the inside surface of the ion exchange tube 31a so that the buffer lla is converted into a weak base solution to form a suppressed buffer solution. If the electrode 36a is positively charged, then the effectiveness of the suppressor is enhanced. The suppressed buffer solution then flows through the electrical conductivity detector 25a. The conductivity of the suppressed buffer, as determined by the detector 25a, is relatively low compared to the conductivity of the buffer lla. When the cations if interest flow through the detector 25a, they are sensitively detected upon the background of the suppressed buffer. In this respect, the invention is similar to suppressed detection in Ion Chromatography. Hopefully, of course, the cations of interest are resolved into detected separate zones by the prior electrophoresis in the capillary tube 10a. The ion exchange material of the suppressor 18a is regenerated by the flow of dilute sodium hydroxide regenerant 20a flowing around the exterior of the tube 31a. The method embodiment for cation analysis discussed above in reference to Fig. 1A is preferred over the method embodiment for cation analysis discussed above in reference to Fig. 5A as being simpler and probably more effective.

In the above discussion, the buffer comprised a salt of a weak base. However the invention is not limited to a buffer comprising a salt of a weak base, e.g, a strong acid can be used such as sulfuric acid which is converted to water by the suppressor. The buffer, when a conductivity detector is used and when its anions are exchanged for the regenerant anions, must be converted to a solution that has reduced electrical conductivity. In this respect, a reference to the suppressed detection Ion Chromatography art will indicate other buffers and regenerant cations that can be used in the invention. The buffer, when another detector is used than a conductivity detector and when its anions are exchanged for the regenerant anions, must be converted to a solution that has a reduced detector response. Most preferably, the cation of the buffer has about the same electrophoretic mobility as the cations of interest.

If a neutral capillary is used, then there is no electroosmotic flow in the capillary. If there is no electroosmotic flow in the capillary, then there is no means of transporting the separated ions to the detector. This problem is overcome in the invention, e.g., by introducing a flowing stream of buffer, water or solvent into the outlet portion of the capillary. Referring now to Fig. 5A, a tee is placed between the outlet portion of the capillary 10a and the buffer bridge 42a. Referring now to Fig. 1A, a tee is placed between the outlet portion of the capillary 10a and the suppressor 18a. Backflow of this flowing stream of buffer towards the inlet portion of the capillary can be prevented, e.g., by completely filling the reservoir 12a with buffer 11a and then sealing the reservoir 12a.

An electrical conductivity detector is preferred in the invention. However, an electrical conductivity detector is not critical in the invention. For example, a photometric detector can be used. Other detectors that can be used include a mass spectrometer, a refractive index detector and a dielectric constant detector. Thus, any detector can be used that detects ions better when the buffer is suppressed.

The capillary of the invention can be negatively charged, positively charged or neutral as discussed above. If the capillary is positively charged and the ions of interest comprise anions or if the capillary is negatively charged and the ions of interest comprise cations, then there can be ion exchange chromatography of the ions of interest as well as electrophoresis of the ions of interest. Usually, most of the separation of the invention is believed to be due to electrophoresis. However, if the capillary of the invention comprises an ion exchange material (such as coating a capillary tube with an ion exchange resin or packing a capillary tube with ion exchange resin beads, a pellicular ion exchanger or a microparticulate ion exchanger), then it is contemplated that ion exchange chromatography can become an important separation mode of the invention.

### EXAMPLE 1A

The system as generally shown in Fig. 1A is assembled. The capillary 10a is a seventy five micrometer internal diameter fused silica capillary sixty centimeters in length. The tube 31a of Fig. 2A is five millimeters in length and is made by stretching a heated and solvent swollen NAFION™ tube to an internal diameter of one hundred and twenty five micrometers. The electrode 36a is positioned as shown in Fig. 2A since its polarity helps the effectiveness of the suppressor 18a. The regenerant 20a is five millimolar sulfuric acid flowing through the suppressor 18a at a flow rate of one hundred microliters per minute. The buffer lla is one millimolar borax at a pH of 8.4. Thus, the inside surface of the capillary 10a is negatively charged The sample 16a contains ten milligrams per liter each of monochloroacetate, dichloroacetate and trichloroacetate. The sample is introduced into the capillary 10a by dipping its end into the sample 16a, lifting the reservoir 17a ten centimeters above the reservoir 29a for thirty seconds, and then replacing the capillary 10a back into the reservoir 12a. Twenty thousand volts positive is applied to the electrode 14a. The wire 19a is grounded. A strip chart recorder is connected to the conductivity detector 25a and it records a pherogram showing a peak for trichloroacetate at about three point nine minutes, a peak for dichloroacetate at about four point one minutes and a peak for monochloroacetate at about four point three minutes.

### EXAMPLE 2A

The experiment of Example 1A is repeated except that the regenerant 20a is mere deionized water. The pherogram shows a peak for monochloroacetate at about three point nine minutes, a peak for dichloroacetate at about four point one minutes and a peak for trichloroacetate at about four point three minutes. This example shows that water can be a source of regenerant hydrogen ions in the invention.

### EXAMPLE 3A

The system as generally shown in Fig. 1A is assembled. The capillary 10a is a one hundred and fifty micrometer internal diameter fused silica capillary forty centimeters in length. The inside surface of the capillary 10a is made to be positively charged by the following steps: (a) the capillary is filled with a solution of: one percent polyvinyl alcohol that is one hundred percent hydrolyzed; two percent phosphoric acid; one percent poly diallyl dimethyl ammonium chloride; and ninety six percent water; (b) the capillary is placed in an oven at ninety degrees centigrade for two hours; and (c) the capillary is cooled and rinsed with buffer for one hour. The thickness of the resulting modified polyvinyl alcohol coating in the capillary is about one micrometer. The tube 31a of Fig. 2A is five millimeters in length and is made by drilling a block of solvent swollen NAFION™ and then letting it dry to shrink down onto the capillary 10a and the tube 24a. The internal diameter of the resulting channel through the NAFION™ is about seventy micrometers. The electrode 36a is positioned near the end of the NAFION™ block that is connected to the capillary 10a so that its influence on the effectiveness of the suppressor is minimized. The regenerant 20a is five millimolar sulfuric acid flowing through the suppressor 18a at a flow rate of one hundred microliters per minute. The buffer lla is one half millimolar borax at a pH of 8.4. The sample 16a contains ten milligrams per liter each of nitrite, nitrate, sulfate and acetate. The sample is introduced into the capillary 10a by dipping its end into the sample 16a, lifting the reservoir 17a ten centimeters above the reservoir 29a for thirty seconds, and then replacing the capillary 10a back into the reservoir 12a. Twenty thousand volts negative is applied to the electrode 14a. The wire 19a is grounded. A strip chart recorder is connected to the conductivity detector 25a and it records a pherogram showing a peak for sulfate at about four point five minutes, a peak for nitrite at about five minutes, a peak for nitrate at about five point three minutes and a peak for acetate at about six minutes. The separation of nitrate and nitrite is greater than expected from the electrophoretic mobilities of these two ions and is explained herein as probably being due to ion exchange chromatography in the capillary 10a.

Having described the preferred embodiments, it will be apparent to those skilled in the art that various modifications may be made to such embodiments and that such modifications are intended to be within the scope of the invention.

## Claims

1. Capillary electrophoresis apparatus for separating ionic species comprising a capillary adapted to contain an electrolyte, the capillary (10, 10a) having a sample inlet portion and an outlet portion, a first electrode (14a, 16) in electrical communication with the inlet portion of the capillary (10, 10a), a second electrode (24, 36a) in electrical communication with the outlet portion of the capillary (10, 10a), a power supply (20, 13a) in electrical communication with said first (14a, 16) and second (24, 36a) electrodes, and detector means (40, 25a), characterized by suppressor means including means for exchanging ions (31a, 34), the means for exchanging ions (31a, 34) being in liquid communication with the outlet portion of the capillary (10, 10a) and with detector means (40, 25a), the means for exchanging ions being stationary, the detector means (25a, 40) being isolated from the current between said first and said second electrode.

2. The capillary electrophoresis apparatus of claim 1, wherein the means for exchanging ions is a conduit (34), the conduit (34) comprising an ion exchange material, the channel of the conduit being in liquid communication with the outlet portion of the capillary (10).

3. The capillary electrophoresis apparatus of claim 2, wherein the path of the electrical communication is across the conduit (34) means.

4. The capillary electrophoresis apparatus of claim 1 or 2 further comprising a porous conduit (22) capable of conducting current generated between the first and second electrodes (16, 24) when an electrolyte is present in said capillary (10), the second electrode (24) being in communication with the outlet portion of the capillary across the porous conduit (22) and suppressor means being in liquid communication with the outlet portion of the capillary (10) through said porous conduit (22).

5. The capillary electrophoresis apparatus of claim 4 wherein said suppressor means include:
a) at least one capillary effluent compartment having an inlet end and an outlet end, said inlet end being in liquid communication with said outlet portion of said capillary (10),
b) at least one regenerant compartment (36), and
c) at least one ion exchange membrane (34) partitioning said capillary effluent compartment and said regenerant compartment (36), said ion exchange membrane being preferentially permeable to the counter ion of said ionic species.

6. The capillary electrophoresis apparatus of claim 5, wherein said capillary effluent compartment and said ion exchange membrane (34) in said suppressor means have substantially the same cross-sectional area.

7. The capillary electrophoresis apparatus of claim 6, wherein the ion exchange membrane is a tube (34) and said capillary (10) and said ion exchange tube (34) have a circular cross section of substantially the same diameter.

8. The capillary electrophoresis apparatus of any of claims 1 to 7, wherein an electric field is applied across the ion exchange means.

9. The capillary electrophoresis apparatus of any of claims 4 to 8, wherein said ion conduction means (22) comprises an amphoteric ion exchange membrane.

10. The capillary electrophoresis apparatus of any of claims 1 to 9, wherein the detector (40) measures the conductivity of the effluent from suppressor means.

11. A method of ion analysis characterized by the combination of the following steps:
(a) passing a sample containing ionic species of interest in an electrolyte solution including electrolyte ions of opposite charge to said ionic species of interest through capillary electrophoretic separating means comprising a capillary (10), a first and a second electrodes (16, 24) for applying an electric field along the capillary, in which said ionic species of interest are separated,
(b) exchanging counter-ions of opposite charge to said ionic species of interest in the electrolyte for regenerant counter-ions using a stationary means for exchanging counter-ions thereby reducing the response of an electrolyte to a detector, which is isolated from the current between said first and said second electrode, to produce a suppressed electrolyte.

12. The method of claim 11, wherein the voltage applied to said first and said second electrode (16, 24) is sufficient to induce electroendosmotic flow through said capillary (10).

13. The method of claim 12, wherein said electroendosmotic flow is from the first end of said capillary (10) in communication with said first electrode (16) to the second end of said capillary in communication with said second electrode (24), the internal surface of said capillary (10) has a negative charge and said first electrode (16) has a positive polarity as compared to said second electrode (24).

14. The method of claim 12, wherein said electroendosmotic flow is from said first end to said second end of said capillary (10), the internal surface of said capillary has a positive charge and said first electrode (16) has a negative polarity has compared to said second electrode (24).

15. The method of claim 11, wherein the ionic species is an anion, the electrolytic solution is a buffer solution and the regenerant counter-ions are cations.

16. The method of claim 15, wherein the buffer solution comprises a salt of a weak acid and the regenerant cations comprise hydrogen ions.

17. The method of claim 11, wherein the ionic species is cation, the electrolytic solution is a buffer solution and the counter-ions are anions.

18. The method of claim 17, wherein the buffer solution comprises a salt of a weak base and the regenerant anions comprise hydroxyde ions.

19. The method of claim 17, wherein the buffer solution comprises a strong acid and the regenerant anions comprise hydroxyde ions.

20. The method of any of claims 11 to 19, wherein an electric field is applied along the capillary and across the means for exchanging counter-ions.

21. The method of any of claims 11 to 19, wherein the electrical conductivity of the suppressed electrolyte is measured to determine the separated ionic species.

## Patentansprüche

1. Kapillarelektrophoresevorrichtung zum Trennen von lonenspezies, umfassend eine Kapillare, die eingerichtet ist, einen Elektrolyten zu enthalten, wobei die Kapillare (10, 10a) einen Probeneinlaßabschnitt und einen Auslaßabschnitt, eine erste Elektrode (14a, 16) in elektrischer Verbindung mit dem Einlaßabschnitt der Kapillare (10, 10a), eine zweite Elektrode (24, 36a) in elektrischer Verbindung mit dem Auslaßabschnitt der Kapillare (10, 10a), eine Stromquelle (20, 13a) in elektrischer Verbindung mit der ersten (14a, 16) und zweiten (24, 36a) Elektrode und ein Detektormittel (40, 25a) aufweist, gekennzeichnet durch Suppressormittel, welche Mittel zum Ionenaustausch (31a, 34) beinhalten, wobei die Mittel zum Ionenaustausch (31a, 34) in flüssiger Verbindung mit dem Auslaßabschnitt der Kapillare (10, 10a) und mit dem Detektormittel (40, 25a) stehen, wobei die Mittel zum Ionenaustausch stationär sind, das Detektormittel (25a, 40) von dem Strom zwischen der ersten und der zweiten Elektrode isoliert ist.

2. Kapillarelektrophoresevorrichtung nach Anspruch 1, worin das Mittel zum Ionenaustausch eine Röhre (34) ist, wobei das Rohr (34) ein lonenaustauschmaterial enthält und der Kanal des Rohrs in flüssiger Verbindung mit dem Auslaßabschnitt der Kapillare (10) steht.

3. Kapillarelektrophoresevorrichtung nach Anspruch 2, worin der Weg der elektrischen Verbindung über das Rohr (34)-Mittel verläuft.

4. Kapillarelektrophoresevorrichtung nach Anspruch 1 oder Anspruch 2, weiterhin umfassend ein poröses Rohr (22), das in der Lage ist, Strom zu leiten, der zwischen der ersten und zweiten Elektrode (16, 24) erzeugt wird, wenn ein Elektrolyt in der Kapillare (10) vorhanden ist, wobei die zweite Elektrode (24) mit dem Auslaßabschnitt der Kapillare über das poröse Rohr (22) in Verbindung steht und das Suppressormittel in flüssiger Verbindung mit dem Auslaßabschnitt der Kapillare (10) durch das poröse Rohr (22) steht.

5. Kapillarelektrophoresevorrichtung nach Anspruch 4, worin das Suppressormittel beinhaltet:
a) mindestens eine Kapillarausflußkammer mit einem Einlaßende und einem Auslaßende, wobei das Einlaßende in flüssiger Verbindung mit dem Auslaßabschnitt der Kapillare (10) steht,
b) mindestens eine Regenerierungsmittelkammer (36) und
c) mindestens eine lonenaustauschmembran (34), die die Kapillarausflußkammer und die Regenerierungsmittelkammer (36) teilt, wobei die Ionenaustauschmembran vorzugsweise für das Gegenion der lonenspezies durchlässig ist.

6. Kapillarelektrophoresevorrichtung nach Anspruch 5, worin die Kapillarausflußkammer und die lonenaustauschmembran (34) in dem Suppressormittel im wesentlichen die gleiche Querschnittsfläche aufweisen.

7. Kapillarelektrophoresevorrichtung nach Anspruch 6, worin die lonenaustauschmembran ein Rohr (34) ist und die Kapillare (10) und das lonenaustauschrohr (34) einen Kreisquerschnitt von im wesentlichen demselben Durchmesser aufweisen.

8. Kapillarelektrophoresevorrichtung nach einem der Ansprüche 1 bis 7, worin ein elektrisches Feld über das lonenaustauschmittel angelegt ist.

9. Kapillarelektrophoresevorrichtung nach einem der Ansprüche 4 bis 8, worin das lonenleitungsmittel (22) eine amphotere lonenaustauschmembran umfaßt.

10. Kapillarelektrophoresevorrichtung nach einem der Ansprüche 1 bis 9, worin der Detektor (40) das spezifische Leitungsvermögen des Ausflusses aus dem Suppressormittel mißt.

11. Verfahren zur lonenanalyse, gekennzeichnet durch die Kombination der folgenden Schritte:
(a) Leiten einer Probe, die lonenspezies von Interesse in einer Elektrolytlösung einschließlich von Elektrolytionen mit entgegengesetzter Ladung zu den lonenspezies von Interesse enthält, durch ein Kapillar-elektrophoretisches Trennmittel, umfasssend eine Kapillare (10), eine erste und eine zweite Elektrode (16, 24) zum Anlegen eines elektrischen Felds entlang der Kapillare, in welchem die lonenspezies von Interesse getrennt werden,
(b) Austauschen von Gegenionen mit entgegengesetzter Ladung zu den lonenspezies von Interesse in dem Elektrolyten mit Regenerierungsmittelgegenionen unter Verwendung eines stationären Mittels zum Austausch von Gegenionen, wodurch die Reaktion eines Elektrolyten an einem Detektor vermindert wird, welcher vom Strom zwischen der ersten und der zweiten Elektrode isoliert ist, um einen suprimierten Elektrolyten herzustellen.

12. Verfahren nach Anspruch 11, worin die an die erste und zweite Elektrode (16, 24) angelegte Spannung ausreicht, um einen elektroendoosmotischen Fluß durch die Kapillare (10) zu induzieren.

13. Verfahren nach Anspruch 12, worin der elektroendoosmotische Fluß von dem ersten Ende der Kapillare (10), in Verbindung mit der ersten Elektrode (16) zu dem zweiten Ende der Kapillare in Verbindung mit der zweiten Elektrode (24) ist, wobei die Innenoberfläche der Kapillare (10) eine negative Ladung trägt und die erste Elektrode (16) eine positive Polarität im Vergleich zu der zweiten Elektrode (24) aufweist.

14. Verfahren nach Anspruch 12, worin der elektroendoosmotische Fluß von dem ersten Ende zum zweiten Ende der Kapillare (10) verläuft, die Innenoberfläche der Kapillare eine positive Ladung trägt und die erste Elektrode (16) eine negative Polarität im Vergleich zu der zweiten Elektrode (24) aufweist.

15. Verfahren nach Anspruch 11, worin die lonenspezies Anionen sind, die Elektrolytlösung eine Pufferlösung ist und die Regenerierungsmittelgegenionen Kationen sind.

16. Verfahren nach Anspruch 15, worin die Pufferlösung ein Salz einer schwachen Säure umfaßt und die Regenerierungsmittelkationen Wasserstoffionen umfassen.

17. Verfahren nach Anspruch 11, worin die lonenspezies Kationen sind, die Elektrolytlösung eine Pufferlösung ist und die Gegenionen Anionen sind.

18. Verfahren nach Anspruch 17, worin die Pufferlösung ein Salz einer schwachen Base umfaßt und die Regenerierungsmittelionen Hydroxidionen umfassen.

19. Verfahren nach Anspruch 17, worin die Pufferlösung eine starke Säure umfaßt und die Regenerierungsmittelanionen Hydroxidionen umfassen.

20. Verfahren nach einem der Ansprüche 11 bis 19, worin ein elektrisches Feld entlang der Kapillare und über das Mittel zum Austausch der Gegenionen angelegt wird.

21. Verfahren nach einem der Ansprüche 11 bis 19, worin das spezifische elektrische Leitungsvermögen des supprimierten Elektrolyten gemessen wird, um die getrennten lonenspezies zu bestimmen.

## Revendications

1. Dispositif d'électrophorèse à capillaire pour séparer des espèces ioniques, comprenant un capillaire adapté pour contenir un électrolyte, le capillaire (10, 10a) ayant une partie d'entrée d'échantillon et une partie de sortie, une première électrode (14a, 16) en communication électrique avec la partie d'entrée du capillaire (10, 10a), une deuxième électrode (24, 36a) en communication électrique avec la partie de sortie du capillaire (10, 10a), une source d'énergie (20, 13a) en communication électrique avec lesdites première (14a, 16) et deuxième (24, 36a) électrodes, et des moyens de détection (40, 25a), caractérisé par des moyens de suppression comprenant des moyens échangeurs d'ions (31a, 34), les moyens échangeurs d'ions (31a, 34) étant en communication liquide avec la partie de sortie du capillaire (10, 10a) et avec les moyens de détection (40, 25a), les moyens échangeurs d'ions étant fixes, les moyens de détection (25a, 40) étant isolés du courant entre ladite première et ladite deuxième électrode.

2. Dispositif d'électrophorèse à capillaire selon la revendication 1, dans lequel les moyens échangeurs d'ions sont constitués d'une conduite (34), la conduite (34) comprenant un matériau échangeur d'ions, le canal de la conduite étant en communication liquide avec la partie de sortie du capillaire (10).

3. Dispositif d'électrophorèse à capillaire selon la revendication 2, dans lequel le trajet de la communication électrique est sur les moyens formant conduite (34).

4. Dispositif d'électrophorèse à capillaire selon l'une des revendications 1 ou 2, comprenant en outre une conduite poreuse (22) capable de conduire le courant généré entre les première et deuxième électrodes (16, 24) quand un électrolyte est présent dans ledit capillaire (10), la deuxième électrode (24) étant en communication avec la partie de sortie du capillaire de part et d'autre de la conduite poreuse (22) et les moyens de suppression étant en communication liquide avec la partie de sortie du capillaire (10) à travers ladite conduite poreuse (22).

5. Dispositif d'électrophorèse à capillaire selon la revendication 4, dans lequel lesdits moyens de suppression comprennent :
a) au moins un compartiment pour l'effluent du capillaire ayant une extrémité d'entrée et une extrémité de sortie, ladite extrémité d'entrée étant en communication fluide avec ladite partie de sortie dudit capillaire (10),
b) au moins un compartiment pour le régénérant (36), et
c) au moins une membrane échangeuse d'ions (34) séparant ledit compartiment pour l'effluent du capillaire et ledit compartiment pour le régénérant (36), ladite membrane échangeuse d'ions étant, de préférence, perméable au contre-ion de ladite espèce ionique.

6. Dispositif d'électrophorèse à capillaire selon la revendication 5, dans lequel ledit compartiment pour l'effluent du capillaire et ladite membrane échangeuse d'ions (34) dans lesdits moyens de suppression ont pratiquement la même surface transversale.

7. Dispositif d'électrophorèse à capillaire selon la revendication 6, dans lequel la membrane échangeuse d'ions est un tube (34) et ledit capillaire (10) et ledit tube échangeur d'ions (34) ont une section transversale circulaire pratiquement de même diamètre.

8. Dispositif d'électrophorèse à capillaire selon l'une des revendications 1 à 7, dans lequel un champ électrique est appliqué aux bornes des moyens échangeurs d'ions.

9. Dispositif d'électrophorèse à capillaire selon l'une des revendications 4 à 8, dans lequel lesdits moyens de conduction ionique (22) comprennent une membrane échangeuse d'ions amphotère.

10. Dispositif d'électrophorèse à capillaire selon l'une des revendications 1 à 9, dans lequel le détecteur (40) mesure la conductivité de l'effluent venant des moyens de suppression.

11. Procédé d'analyse d'ions, caractérisé par la combinaison des étapes suivantes :
(a) passage d'un échantillon contenant des espèces ioniques faisant l'objet de l'étude dans une solution d'électrolyte contenant des ions d'électrolyte de charge opposée à celle des espèces ioniques faisant l'objet de l'étude au travers de moyens de séparation électrophorétique à capillaire comprenant un capillaire (10), une première et une deuxième électrode (16, 24) pour appliquer un champ électrique le long du capillaire, dans lesquels lesdites espèces ioniques faisant l'objet de l'étude sont séparées,
(b) échange de contre-ions de charge opposée à celle des espèces ioniques faisant l'objet de l'étude dans l'électrolyte contre des contre-ions régénérants par utilisation de moyens fixes échangeurs de contre-ions de façon à réduire la réponse d'un électrolyte à un détecteur, qui est isolé du courant entre ladite première et ladite deuxième électrode, pour produire un électrolyte supprimé.

12. Procédé selon la revendication 11, dans lequel la tension appliquée à ladite première et à ladite deuxième électrode (16, 24) est suffisante pour induire un écoulement électro-endosmotique à travers ledit capillaire (10).

13. Procédé selon la revendication 12, dans lequel ledit écoulement électro-endosmotique va de la première extrémité dudit capillaire (10) en communication avec ladite première électrode (16) à la deuxième extrémité dudit capillaire en communication avec ladite deuxième électrode (24), la surface interne dudit capillaire (10) a une charge négative et ladite première électrode (16) a une polarité positive comparée à ladite deuxième électrode (24).

14. Procédé selon la revendication 12, dans lequel ledit écoulement électro-endosmotique va de ladite première extrémité à ladite deuxième extrémité dudit capillaire (10), la surface interne dudit capillaire a une charge positive et ladite première électrode (16) a une polarité négative comparée à ladite deuxième électrode (24).

15. Procédé selon la revendication 11, dans lequel l'espèce ionique est un anion, la solution électrolytique est une solution tampon et les contre-ions du régénérant sont des cations.

16. Procédé selon la revendication 15, dans lequel la solution tampon comprend un sel d'un acide faible et les cations régénérants comprennent des ions hydrogène.

17. Procédé selon la revendication 11, dans lequel l'espèce ionique est un cation, la solution électrolytique est une solution tampon et les contre-ions sont des anions.

18. Procédé selon la revendication 17, dans lequel la solution tampon comprend un sel d'une base faible et les anions du régénérant comprennent des ions hydroxyde.

19. Procédé selon la revendication 17, dans lequel la solution tampon comprend un acide fort et les anions du régénérant comprennent des ions hydroxyde.

20. Procédé selon l'une des revendications 11 à 19, dans lequel un champ électrique est appliqué le long du capillaire et aux bornes des moyens échangeurs de contre-ions.

21. Procédé selon l'une des revendications 11 à 19, dans lequel la conductivité électrique de l'électrolyte supprimé est mesurée pour déterminer les espèces ioniques séparées.
